# EUROPÄISCHE PATENTSCHRIFT

(11) **EP 2 738 055 B1**
(45) Veröffentlichungstag und Bekanntmachung des Hinweises auf die Patenterteilung: **09.05.2018**
(21) Anmeldenummer: 13189660.7
(22) Anmeldetag: 22.10.2013
(51) Int. Cl.: B60T 1/04, B62L 3/08, B62K 19/38

(54) **Antiblockier-Bremsanordnung für ein Fahrzeug, Fahrzeug sowie Verfahren zum Abbremsen eines Fahrzeugs**
Anti-locking brake assembly for a vehicle, vehicle and method for braking a vehicle
Agencement de freinage antiblocage pour un véhicule, véhicule et procédé de freinage d'un véhicule

(30) Priorität: 03.12.2012 DE 102012222079
(43) Veröffentlichungstag der Anmeldung: 04.06.2014
(73) Patentinhaber: ROBERT BOSCH GMBH, 70442 Stuttgart (DE)
(72) Erfinder: Claus, Peter, 71726 Benningen (DE); Verhagen, Armin, 71701 Schwieberdingen (DE); Motschenbacher, Christian, 74232 Abstatt (DE); Katzschmann, Martin, 04703 Bockelwitz (DE)

(56) Entgegenhaltungen:
- WO-A1-00/18639
- WO-A1-2004/054836
- DE-A1- 4 122 491
- FR-A- 1 347 115
- FR-A1- 2 313 242
- FR-A1- 2 932 139
- GB-A- 1 177 502
- US-A- 3 699 826
- US-A- 4 102 439

## Beschreibung

Die Erfindung betrifft eine Antiblockier-Bremsanordnung für ein Fahrzeug, insbesondere für ein Zweirad, sowie ein Fahrzeug, insbesondere ein Zweirad, mit zumindest einer derartigen Antiblockier-Bremsanordnung. Ferner betrifft die Erfindung ein Verfahren zum Abbremsen eines Fahrzeugs, insbesondere eines Zweirades.

Wenngleich sich die Erfindung bei Fahrzeugen verschiedener Art, insbesondere bei relativ leichten und kostengünstigen Fahrzeugen, als nützlich erweisen kann, soll die Erfindung nachfolgend am Beispiel eines als Fahrrad ausgeführten Zweirades näher beschrieben werden. Das Fahrrad kann hierbei als ein rein muskelkraftgetriebenes Fahrrad oder als ein Fahrrad mit einem motorischen Antrieb, insbesondere einem elektrischen Antrieb, der anstelle der Muskelkraft des Fahrers oder zusätzlich zu dieser wirken kann, ausgebildet sein.

In der DE 10 2010 038 525 A1 wird eine hydraulische Bremsvorrichtung für leichte einspurige Fahrzeuge, wie Fahrräder und Pedelecs, mit einer aktiven Bremskraftbegrenzung beschrieben. In einem Hydrauliksystem der Bremsvorrichtung ist ein Piezostack angeordnet. Durch eine Volumenänderung des Piezostacks kann ein Fluiddruck in dem Hydrauliksystem variiert werden. Ein Blockieren eines Rades oder ein Überschlag soll durch gezieltes Ansteuern des Piezostacks verhindert werden.

Die FR 2 313 242 A1 offenbart eine Antiblockier-Bremseinrichtung für Fahrzeuge, die ein erstes und ein zweites Bremsmittel umfasst. Das erste Bremsmittel hat den vorrangigen Zweck, die kinetische Energie des Fahrzeugs zu absorbieren. Das zweite Bremsmittel hat den sekundären Zweck, die kinetische Energie des Fahrzeugs derart zu absorbieren, dass gewährleistet ist, dass die Bremswirkung nicht abrupt erfolgt und die Bremswirkung auf die Räder innerhalb eines gewissen Sicherheitsbereichs unabhängig von der Bremskraft ist.

Die FR 1 347 115 A bezieht sich auf eine Bremskontrolleinrichtung für Räder von Land- und Luftfahrzeugen, die gewährleistet, dass sich die gebremsten Räder während des Bremsvorgangs gerade noch so schnell drehen, dass eine optimale Bodenhaftung und damit eine optimale Bremswirkung erfolgt.

Die GB 1 177 502 A betrifft ein Antischlupfsystem für motorgetriebene Fahrzeuge, das neben einem Haupt-Differentialgetriebe ein weiteres Differentialgetriebe aufweist.

Die vorliegende Erfindung schafft eine Antiblockier-Bremsanordnung für ein Fahrzeug mit den Merkmalen des Patentanspruchs 1, ein Fahrzeug mit den Merkmalen des Patentanspruchs 8 und ein Verfahren zum Abbremsen eines Fahrzeugs mit den Merkmalen des Patentanspruchs 10.

Erfindungsgemäß wird eine Antiblockier-Bremsanordnung für ein Fahrzeug, insbesondere für ein Zweirad, vorgeschlagen, die eine erste Bremseinrichtung und eine Fliehkraftkupplung aufweist. Hierbei ist die Fliehkraftkupplung dafür vorgesehen, ein erstes Element der ersten Bremseinrichtung und ein erstes Rad des Fahrzeugs miteinander zu koppeln. Diese Kopplung erfolgt in der Weise, dass mittels der Fliehkraftkupplung ein Bremsmomentfluss von dem ersten Element der ersten Bremseinrichtung auf das erste Rad unterbrochen wird, wenn eine Winkelgeschwindigkeit des ersten Rades im Wesentlichen Null wird, das erste Rad also blockiert.

Ein erfindungsgemäßes Fahrzeug weist zumindest ein Rad zum fahrbaren Abstützen des Fahrzeugs auf einem Untergrund auf und kann insbesondere als ein Zweirad ausgebildet sein. Hierbei ist das erfindungsgemäße Fahrzeug mit zumindest einer derartigen Antiblockier-Bremsanordnung ausgestattet.

Die der vorliegenden Erfindung zu Grunde liegende Idee besteht darin, eine Bremsanordnung für ein Fahrzeug bereitzustellen, mit der auf rein mechanische Weise und ohne den Einsatz elektronischer oder elektromechanischer Komponenten eine Antiblockierfunktionalität (kurz, eine ABS-Funktion) erzielt werden kann. Aufgrund der rein mechanischen Ausführung eignet sich die Erfindung besonders gut, um ein leichtes Fahrzeug, beispielsweise ein leichtes Zweirad wie etwa ein muskelkraftgetriebenes Fahrrad, ein E-Bike oder ein Pedelec mit elektrischem Antrieb oder elektrischem Hilfsantrieb, oder ein Mofa, mit einer einfach zu realisierenden, kostengünstigen und zuverlässig wirkenden ABS-Funktion auszustatten. Auf diese Weise gelingt es, ein Blockieren des ersten Rades und einen möglicherweise resultierenden Verlust der Kontrolle über das Fahrzeug zu vermeiden. Ist das Fahrzeug einspurig und wird das Vorderrad des Fahrzeugs als das erste Rad gewählt, so kann mit der Erfindung ein Überschlag des Fahrers über den Lenker bei übermäßig starkem Bremsen verhindert werden. Die Erfindung kann sich aber auch bei leichten mehrspurigen Fahrzeugen - wie etwa muskelkraftbetriebenen, rikschaartigen Gefährten mit mehr als zwei Rädern - als nützlich erweisen, um zum Beispiel ein Schleudern beim Blockieren der Räder zu verhindern.

Bei der Erfindung wird die ABS-Funktion durch die Bereitstellung einer ersten Bremseinrichtung und einer Fliehkraftkupplung erreicht. Durch Betätigung der ersten Bremseinrichtung wird das erste Rad gebremst und das Fahrzeug verzögert. Bei scharfem Bremsen kann es gerade auch auf ungünstigem Untergrund, etwa bei geringer Reibung zwischen Reifen und Untergrund, zum Beispiel bei Feuchtigkeit, Regen oder Vereisung, zu einem Blockieren des gebremsten ersten Rades kommen. Unterschreitet die Winkelgeschwindigkeit des ersten Rades einen vordefinierten Grenzwert oder wird sie Null, blockiert das erste Rad also, dann führt die Unterbrechung des Bremsmomentflusses vom ersten Element der ersten Bremseinrichtung auf das erste Rad dazu, dass die erste Bremseinrichtung nicht mehr zur Bremsung des ersten Rades beiträgt. Durch den Wegfall der Bremswirkung der ersten Bremseinrichtung kann das erste Rad sich wieder zu drehen beginnen, wodurch die Fliehkraftkupplung sich wieder schließt und die Unterbrechung der Bremsmomentübertragung aufgehoben wird. Auf diese Weise kann die erste Bremseinrichtung erneut am ersten Rad wirksam werden.

Mit der Erfindung kann die ABS-Funktion auf rein mechanischem Weg erreicht werden, daher eignet sich die Erfindung nicht nur für Fahrzeuge mit einer elektrischen Stromquelle wie etwa E-Bikes, sondern auch für herkömmliche, rein muskelkraftbetriebene Fahrräder. Die Erfindung trägt zur Verbesserung der Fahreigenschaften des Fahrzeugs bei und ermöglicht eine optimale Bremskraftverteilung, die sich günstig auf den Bremsweg auswirken kann.

Vorteilhafte Ausgestaltungen und Weiterbildungen der Erfindung ergeben sich aus den Unteransprüchen sowie aus der Beschreibung unter Bezugnahme auf die Figuren der Zeichnung.

In einer bevorzugten Ausgestaltung ist vorgesehen, eine Antriebsseite der Fliehkraftkupplung derart einzurichten, dass diese Antriebsseite in drehmomentübertragender Weise mit dem ersten Rad gekoppelt werden kann, während eine Abtriebsseite der Fliehkraftkupplung mit dem ersten Element der ersten Bremseinrichtung drehmomentübertragend gekoppelt ist. Eine Drehung des Rades bewirkt bei dieser Ausgestaltung das Schließen der Fliehkraftkupplung, wodurch ein Bremsmomentfluss zwischen dem ersten Element der ersten Bremseinrichtung und dem ersten Rad ermöglicht wird.

In einer weiteren bevorzugten und vorteilhaften Ausgestaltung weist die Antiblockier-Bremsanordnung ferner ein Getriebe auf. Hierbei ist eine Antriebsseite des Getriebes für eine drehmomentübertragende Kopplung mit dem ersten Rad eingerichtet. Zudem ist eine Abtriebsseite des Getriebes mit einer Antriebsseite der Fliehkraftkupplung in drehfester und drehmomentübertragender Weise gekoppelt. Weiterhin ist eine Abtriebsseite der Fliehkraftkupplung mit dem ersten Element der ersten Bremseinrichtung in drehmomentübertragender Weise gekoppelt. Bei dieser Ausgestaltung ist das Getriebe derart ausgebildet, dass es eine auf der Antriebsseite des Getriebes anliegende erste Drehzahl in eine zweite Drehzahl auf der Abtriebsseite des Getriebes übersetzt und die zweite Drehzahl höher als die erste Drehzahl ist. Diese Ausgestaltung hat den Vorteil, dass durch die Wirkung des Getriebes die an der Fliehkraftkupplung eingangsseitig anliegende Drehzahl erhöht wird und dadurch auch bei geringen Winkelgeschwindigkeiten (geringen Drehzahlen) des ersten Rades ein Einkuppeln erzielt wird und die erste Bremseinrichtung am ersten Rad wirksam werden kann.

In einer Ausgestaltung unterbricht die Fliehkraftkupplung den Bremsmomentfluss, wenn die Winkelgeschwindigkeit des ersten Rades einem Wert von im Wesentlichen Null um eine Drehachse des ersten Rades in Bezug auf ein Bauteil des Fahrzeugs, an dem das erste Rad drehbar gelagert ist, entspricht.

Bei einer bevorzugten und vorteilhaften Weiterbildung weist die Antiblockier-Bremsanordnung ferner eine zweite Bremseinrichtung auf. Die zweite Bremseinrichtung ist derart ausgebildet, dass sowohl wenn der Bremsmomentfluss von dem ersten Element der ersten Bremseinrichtung auf das erste Rad ununterbrochen ist und somit eine Bremsmomentübertragung von dem ersten Element auf das erste Rad möglich ist, als auch im Falle der Unterbrechung dieses Bremsmomentflusses durch die Fliehkraftkupplung, eine Bremskraft und/oder ein Bremsmoment mittels der zweiten Bremseinrichtung auf das erste Rad oder auf ein zweites Rad oder auf das erste Rad und das zweite Rad des Fahrzeugs aufbringbar ist/sind. Die zweite Bremseinrichtung ist somit auch bei Unterbrechung des Bremsmomentflusses durch die Fliehkraftkupplung immer noch wirksam, so dass sich das Fahrzeug nicht völlig ungebremst weiterbewegt und die Sicherheit beim Bremsen verbessert wird.

Bei einer Weiterbildung ist die zweite Bremseinrichtung derart ausgebildet, dass die mittels der zweiten Bremseinrichtung auf das erste Rad oder auf das zweite Rad oder auf das erste und das zweite Rad aufbringbare Bremskraft und/oder das mittels der zweiten Bremseinrichtung auf das erste Rad oder auf das zweite Rad oder auf das erste und das zweite Rad aufbringbare Bremsmoment begrenzt ist bzw. sind. Diese Begrenzung ist hierbei derart eingerichtet und ausgelegt, dass die Winkelgeschwindigkeit des ersten Rades nach einer Unterbrechung des Bremsmomentflusses von dem ersten Element der ersten Bremseinrichtung auf das erste Rad mittels der Fliehkraftkupplung unter der Wirkung der Trägheit des Fahrzeugs wieder zunehmen kann, wenn das Fahrzeug innerhalb eines vordefinierten Bereiches von Betriebsverhältnissen betrieben wird. Als ein solcher Bereich von Betriebsverhältnissen kommt die Auswahl von vordefinierten Bereichen einer Anzahl von Parametern in Betracht, die die Verhältnisse, unter denen der Betrieb des Fahrzeuges erfolgt, kennzeichnen, beispielsweise die Kombination des Reifenmaterials am ersten Rad mit verschiedenen Untergründen wie Straße, Schotter, Sand etc., die Betriebstemperaturen, die Umgebungsfeuchtigkeit und dergleichen. Beispielsweise könnte man auf statistischem Wege ermitteln, mit welchen Betriebsverhältnissen in dem vorgenannten Sinne üblicherweise zu rechnen ist, und die Begrenzung derart auslegen, dass unter diesen üblichen Betriebsverhältnissen die Winkelgeschwindigkeit des ersten Rades nach der Unterbrechung des Bremsmomentflusses wieder zunimmt. Wahlweise kann hier auch ein Wahlschalter vorgesehen werden, mit dem der Fahrer den Untergrund bzw. Fahrstil vorwählen kann.

Die Begrenzung des/der mittels der zweiten Bremseinrichtung aufbringbaren Bremsmoments bzw. Bremskraft kann in einer bevorzugten Ausgestaltung durch entsprechende Auslegung eines Betätigungsstrangs der zweiten Bremseinrichtung, etwa eines Seilzuges (Bowdenzuges), erfolgen. Es kann aber innerhalb des Betätigungsstrangs auch ein elastisches Element, beispielsweise ein Federelement, vorgesehen sein, welches in geeigneter Weise ausgelegt ist, um die Begrenzung zu bewirken. Damit gelingt die Begrenzung von Bremskraft und/oder Bremsmoment der zweiten Bremseinrichtung auf rein mechanische Weise und bei einfachem Aufbau der zweiten Bremseinrichtung.

In einer weiteren Verbesserung kann die zweite Bremseinrichtung zum Variieren des durch die zweite Bremseinrichtung maximal aufbringbaren Bremsmoments und/oder der maximal aufbringbaren Bremskraft einstellbar ausgebildet sein. Zum Beispiel kann das elastische Element mit einer geeigneten Einstellmöglichkeit versehen sein. Auf diese Weise kann das Bremsverhalten der Bremsanordnung abhängig zum Beispiel von unterschiedlichen Untergründen oder Wetterbedingungen passend eingestellt werden.

In einer Ausgestaltung ist eine Bedieneinrichtung vorgesehen, mittels der die erste Bremseinrichtung und die zweite Bremseinrichtung gemeinsam betätigbar sind. Vorzugsweise ist die Bedieneinrichtung derart eingerichtet, dass die Betätigung der beiden Bremseinrichtungen gleichzeitig erfolgen kann. Dies erhöht den Komfort und die Bediensicherheit, indem gewährleistet wird, dass bei der Unterbrechung des Bremsmomentflusses mittels der Fliehkraftkupplung noch eine wirkende Bremseinrichtung - die zweite Bremseinrichtung - vorhanden ist.

Gemäß einer Ausgestaltung weist die erste Bremseinrichtung eine Scheibenbremse auf. Hierbei ist das erste Element der ersten Bremseinrichtung als Bremsscheibe der Scheibenbremse ausgebildet. Scheibenbremsen wirken in der Regel sehr gut und können hohe Bremsmomente erzielen. Die oben beschriebene ABS-Funktion ist daher insbesondere beim Einsatz von Scheibenbremsen nützlich, da der Fahrer mit diesen wegen der hohen Wirksamkeit leichter ein Blockieren des Rades herbeiführen kann.

Gemäß einer Ausgestaltung weist die zweite Bremseinrichtung eine bei Betätigung der zweiten Bremseinrichtung auf eine Felge des ersten Rades wirkende Felgenbremse und/oder eine bei Betätigung der zweiten Bremseinrichtung auf eine Felge des zweiten Rades wirkende Felgenbremse auf. Da die zweite Bremseinrichtung hinsichtlich der aufbringbaren Bremskraft bzw. des aufbringbaren Bremsmoments vorzugsweise begrenzt ist, kann sich eine herkömmliche Felgenbremse für die zweite Bremseinrichtung eignen. Wird diese Ausgestaltung zudem mit einer eine Scheibenbremse aufweisenden ersten Bremseinrichtung kombiniert, so lassen sich die erste und zweite Bremseinrichtung in günstiger Weise räumlich getrennt und platzsparend am selben Rad des Fahrzeugs anordnen.

In einer Ausgestaltung des erfindungsgemäßen Fahrzeugs ist das Fahrzeug als ein Zweirad, insbesondere als ein Fahrrad, ausgebildet. Die Antiblockier-Bremseinrichtung dient hierbei vorteilhaft dem Verhindern des Überschlags eines Fahrers über den Vorderlenker sowie dem Vermeiden des Blockierens eines Rades des Fahrzeugs.

In einer Ausgestaltung des Fahrzeugs sind die erste und die zweite Bremseinrichtung am selben Rad des Fahrzeugs angeordnet, wodurch beide Bremseinrichtungen ohne Umwege auf die Winkelgeschwindigkeit dieses Rades einwirken können.

In einer weiteren Ausgestaltung eines als Zweirad ausgebildeten Fahrzeugs sind die erste und zweite Bremseinrichtung am Vorderrad des Zweirades angeordnet, was nützlich ist, um den Überschlag des Fahrers über den Vorderlenker bei übermäßigem Bremsen zu verhindern.

In einer Weiterentwicklung weist das Fahrzeug mehrere Räder auf, wobei jedes der Räder des Fahrzeugs mit einer erfindungsgemäßen Antiblockier-Bremsanordnung ausgestattet ist. Vorzugsweise ist hierbei jede der Antiblockier-Bremsanordnungen derart eingerichtet, dass die jeweilige erste und zweite Bremseinrichtung am selben Rad des Fahrzeugs wirksam werden kann. Mit dieser Weiterentwicklung wird vorteilhaft an jedem der Räder eine ABS-Funktion bereitgestellt.

Erfindungsgemäß wird ferner ein Verfahren zum Abbremsen eines Fahrzeugs, insbesondere eines Zweirades, bereitgestellt, wobei das Fahrzeug eine Antiblockier-Bremsanordnung mit einer ersten Bremseinrichtung, mit einer zweiten Bremseinrichtung und mit einer Fliehkraftkupplung, mittels der ein erstes Element der ersten Bremseinrichtung und ein erstes Rad des Fahrzeugs miteinander gekoppelt sind, aufweist. Das Verfahren weist die folgenden Verfahrensschritte auf:
- Ein erstes Bremsmoment wird mittels der ersten Bremseinrichtung über das erste Element der ersten Bremseinrichtung auf das erste Rad aufgebracht und eine Bremskraft und/oder ein zweites Bremsmoment wird/werden auf das erste Rad und/oder auf ein zweites Rad des Fahrzeugs mittels der zweiten Bremseinrichtung aufgebracht;
- ein Bremsmomentfluss von dem ersten Element der ersten Bremseinrichtung auf das erste Rad wird mittels der Fliehkraftkupplung unterbrochen, wenn eine Winkelgeschwindigkeit des ersten Rades einen vorbestimmten Grenzwert unterschreitet; und
- es erfolgt ein fortgesetztes Aufbringen der Bremskraft und/oder des zweiten Bremsmoments auf das erste Rad und/oder auf das zweite Rad des Fahrzeugs mittels der zweiten Bremseinrichtung, während der Bremsmomentfluss von dem ersten Element der ersten Bremseinrichtung auf das erste Rad durch die Fliehkraftkupplung unterbrochen ist.

Dieses Verfahren ermöglicht es, ein Fahrzeug, insbesondere ein Zweirad, auf einfache, sichere Weise zu bremsen und zugleich auf mechanischem Wege ein Blockieren des ersten Rades, etwa des Vorderrades, zu verhindern. Auch ein Überschlag, zum Beispiel über den Lenker eines Fahrrades, kann vermieden werden. Die oben in Bezug auf die Antiblockier-Bremsanordnung und das Fahrzeug aufgeführten Ausgestaltungen können in analoger Weise das erfindungsgemäße Verfahren vorteilhaft weiterbilden.

Insbesondere wird dabei der Fachmann auch Einzelaspekte als Verbesserungen oder Ergänzungen zu der jeweiligen Grundform der vorliegenden Erfindung hinzufügen.

Die Erfindung wird nachfolgend anhand der in den schematischen Figuren der Zeichnung angegebenen Ausführungsbeispiele näher erläutert. Es zeigen hierbei
- Fig. 1: ein schematisches Blockschaltbild einer Antiblockier-Bremsanordnung gemäß einem ersten Ausführungsbeispiel der Erfindung;
- Fig. 2: eine Anordnung zweier Antiblockier-Bremsanordnungen an einem Zweirad gemäß einem zweiten Ausführungsbeispiel der Erfindung; und
- Fig. 3: eine Anordnung einer Antiblockier-Bremsanordnung an einem Zweirad gemäß einem dritten Ausführungsbeispiel der Erfindung.

Die beiliegenden Figuren der Zeichnungen sollen ein weiteres Verständnis der Ausführungsformen der vorliegenden Erfindung vermitteln. Sie veranschaulichen Ausführungsformen und dienen im Zusammenhang mit der Beschreibung der Erläuterung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnungen sind gleiche, funktionsgleiche und gleich wirkende Elemente, Merkmale und Komponenten - soweit nichts anderes angegeben ist - mit denselben Bezugszeichen versehen.

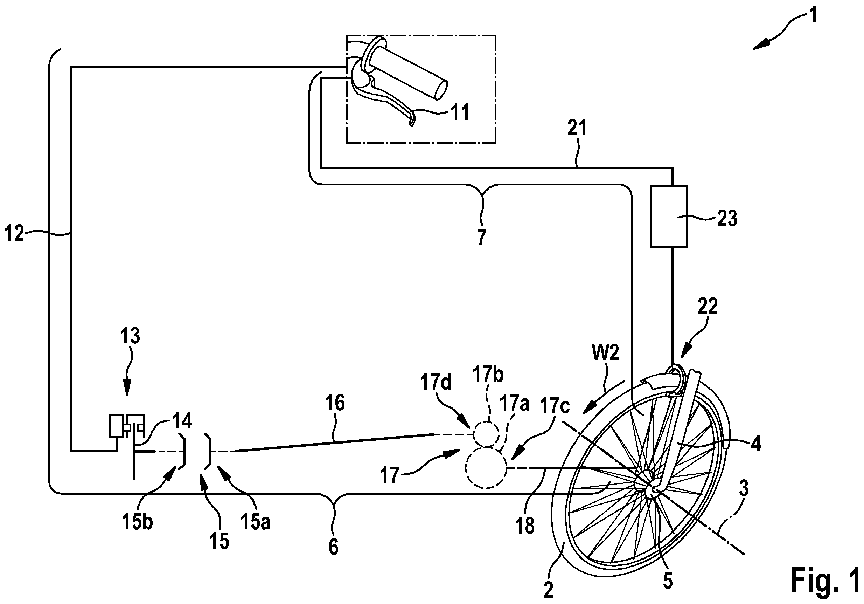

In Figur 1 ist in einem Blockschaltbild eine Antiblockier-Bremsanordnung 1 gemäß einem ersten Ausführungsbeispiel gezeigt. Dargestellt ist ein als Vorderrad ausgeführtes erstes Rad 2 eines nur abschnittsweise gezeigten, als Fahrrad ausgebildeten einspurigen Fahrzeugs. Das erste Rad 2 dient dem fahrbaren Abstützen des Fahrzeugs auf einem Untergrund und ist um eine Drehachse 3 drehbar an einem Bauteil 4 des Fahrzeugs, hier einer Fahrradgabel, gelagert. Hierzu weist das erste Rad 2 eine Radnabe 5 auf.

Das erste Rad 2 kann mittels einer ersten Bremseinrichtung 6 und einer zweiten Bremseinrichtung 7 gebremst werden. Damit ein Fahrer des Fahrzeugs die Bremseinrichtungen 6 und 7 betätigen kann, ist eine Bedieneinrichtung 11 vorgesehen, beispielsweise ein Bremshebel, der an einem Lenker des Fahrzeugs angeordnet sein kann.

Die erste Bremseinrichtung 6 weist einen Betätigungsstrang 12, zum Beispiel einen Seilzug oder eine Hydraulikleitung, auf, mittels der eine vom Fahrer auf die Bedieneinrichtung 11 aufgebrachte Kraft auf eine Scheibenbremse 13 der ersten Bremseinrichtung 6 übertragen werden kann. Ein erstes Element 14 der ersten Bremseinrichtung 6 ist als eine Bremsscheibe der Scheibenbremse 13 ausgebildet. Durch Zusammenwirken mit weiteren Komponenten der Scheibenbremse 13, die an dem Bauteil 4 abgestützt werden, kann die Bremsscheibe 14 abgebremst werden. Ferner weist die erste Bremseinrichtung 6 eine Fliehkraftkupplung 15, eine beispielsweise als Welle oder Hohlwelle ausgebildete mechanische Verbindungseinrichtung 16, ein Getriebe 17 sowie eine wiederum beispielsweise als Welle oder Hohlwelle ausgebildete mechanische Verbindungseinrichtung 18 auf. Das Getriebe 17 kann als ein Zahnradgetriebe mit mehreren Zahnrädern 17a, 17b ausgebildet sein. Wenngleich das Getriebe 17 in Figur 1 als ein Stirnradgetriebe mit zwei kämmenden Zahnrädern schematisch skizziert ist, kann es vorteilhaft sein, das Getriebe 17 in anderer Bauform, zum Beispiel als ein Planetengetriebe, auszuführen. Das Getriebe 17 kann beispielhaft im Bereich der Radnabe 5, etwa zumindest teilweise innerhalb eines Nabengehäuses, angeordnet sein, oder in einem separaten Gehäuse untergebracht werden.

Die mechanische Verbindungseinrichtung 18 koppelt das erste Rad 2, zum Beispiel vermittelt über die Radnabe 5, in drehmomentübertragender, drehfester Weise mit einer Antriebsseite 17c des Getriebes 17, anders gesagt, das Zahnrad 17a ist bei dem gezeigten Ausführungsbeispiel über die mechanische Verbindungseinrichtung 18 drehfest mit dem ersten Rad 2 verbunden. Die mechanische Verbindungseinrichtung 16 koppelt eine Abtriebsseite 17d des Getriebes 17 in drehmomentübertragender und drehfester Weise mit einer Antriebsseite 15a der Fliehkraftkupplung 15. Beispielsweise kann mittels der mechanischen Verbindungseinrichtung 16 eine Antriebswelle der Fliehkraftkupplung 15 mit dem Zahnrad 17b drehfest verbunden sein. Eine Abtriebsseite 15b der Fliehkraftkupplung 15 ist mit dem ersten Element 14, welches als Bremsscheibe ausgebildet ist, in drehfester, drehmomentübertragender Weise gekoppelt.

Eine an der Antriebsseite 17c des Getriebes 17 anliegende erste Drehzahl, die einer Drehzahl des ersten Rades 2 entspricht, wird mittels des Getriebes 17 in eine zweite, höhere Drehzahl auf der Abtriebsseite 17d übersetzt. An der Antriebsseite 15a der Fliehkraftkupplung 15 liegt somit eine Drehzahl an, die höher ist als die Drehzahl des ersten Rades 2. Hierdurch kuppelt die Fliehkraftkupplung 15 bereits bei geringen Winkelgeschwindigkeiten W2 des ersten Rades 2 um dessen Drehachse 3 ein, wodurch die Fliehkraftkupplung 15 eine drehmomentübertragende Kopplung zwischen dem ersten Element 14 und dem ersten Rad 2 herbeiführt. Das Betätigen der ersten Bremseinrichtung 6 mittels der Bedieneinrichtung 11 führt somit bei geschlossener Fliehkraftkupplung 15 durch Einwirken von Bremsbelägen der Scheibenbremse 13 auf das erste Element 14 zu einem Abbremsen des ersten Rades 2.

Gleichzeitig mit der Betätigung der ersten Bremseinrichtung 6 ist mittels der Bedieneinrichtung 11 auch die zweite Bremseinrichtung 7 gemeinsam mit der ersten Bremseinrichtung 6 betätigbar. Die zweite Bremseinrichtung 7 weist einen Betätigungsstrang 21 auf, der mit einem Seilzug oder einer Hydraulikleitung ausgebildet sein kann. Vorzugsweise ist der Betätigungsstrang 21 mit einem Seilzug ausgebildet, der auf eine herkömmliche Felgenbremse 22 einwirkt. Die Felgenbremse 22 ist in Figur 1 nur schematisch angedeutet, ist aber derart eingerichtet, dass sie auf eine Felge des ersten Rades 2 einwirkt, wenn eine Betätigung mittels der Bedieneinrichtung 11 erfolgt, wodurch eine Bremskraft auf die Felge aufgebracht wird. Die mittels der Felgenbremse 22 auf die Felge und damit auf das erste Rad 2 aufbringbare Bremskraft - und somit auch das Bremsmoment, das das erste Rad 2 aufgrund der Betätigung der Felgenbremse 22 erfährt - ist bei der zweiten Bremseinrichtung 7 in einer nachfolgend näher beschriebenen Weise begrenzt. Hierzu dient eine in Figur 1 schematisch dargestellte Begrenzungseinrichtung 23, bei der es sich um eine separate, innerhalb des Betätigungsstrangs 21 angeordnete Einrichtung, etwa ein elastisches Element wie beispielsweise ein Federelement, handeln kann. In einer Variante ist das elastische Element mit einer Einstellmöglichkeit zur Einstellung der maximalen Bremskraft/des maximalen Bremsmoments versehen. Die skizzierte Begrenzungseinrichtung 23 soll aber auch in der Weise verstanden werden, dass die Nachgiebigkeit des Betätigungsstrangs 21 der zweiten Bremseinrichtung 7 in die Bremskraft begrenzender Weise ausgelegt sein kann, zum Beispiel über die Elastizität des Seilzuges, ohne dass ein zusätzliches separates elastisches Element oder ähnliches benötigt wird.

Im folgenden wird der Betrieb der Antiblockier-Bremsanordnung 1 gemäß Figur 1 beschrieben. Befindet sich das Fahrzeug in Fahrt, so rollt das erste Rad 2 auf einem Untergrund ab. Dabei dreht sich das erste Rad 2 mit einer von der Fahrgeschwindigkeit abhängigen Winkelgeschwindigkeit W2 bezüglich des Bauteils 4 um die Drehachse 3. Zum Bremsen betätigt der Fahrer die Bedieneinrichtung 11. Dadurch werden beide Bremseinrichtungen 6 und 7 aktiviert und das Fahrzeug wird verzögert. Hierbei wird mittels der ersten Bremseinrichtung 6 ein Bremsmoment auf das erste Rad 2 aufgebracht, indem die Bremsbeläge der Scheibenbremse 13 auf die Bremsscheibe, die bei diesem Ausführungsbeispiel dem ersten Element 14 entspricht, aufgepresst werden. Das Bremsmoment wird über die geschlossene Fliehkraftkupplung 15, die mechanische Verbindungseinrichtung 16, das Getriebe 17 und die mechanische Verbindungseinrichtung 18 auf das erste Rad 2 übertragen. Gleichzeitig mit dem Aktivieren der ersten Bremseinrichtung 6 wird auch die zweite Bremseinrichtung 7 aktiviert. Über den Betätigungsstrang 21 wird eine Bremskraft auf die Felge des ersten Rades 2 aufgebracht und, da die Bremskraft von der Drehachse 3 entfernt angreift, das erste Rad 2 mit einem weiteren Bremsmoment beaufschlagt.

Blockiert hierbei das erste Rad 2, mit anderen Worten, beträgt die Winkelgeschwindigkeit W2 desselben bezüglich des Bauteils 4 Null, so öffnet sich die Fliehkraftkupplung 15 und unterbricht den Bremsmomentfluss von dem ersten Element 14 (der Bremsscheibe) auf das erste Rad 2. Alternativ kann sich die Fliehkraftkupplung 15 bereits dann öffnen, wenn diese Winkelgeschwindigkeit W2 einen vorbestimmten Grenzwert unterschreitet, zum Beispiel dann, wenn sich das erste Rad 2 nur noch sehr langsam dreht. Die zweite Bremseinrichtung 7 ist auch dann am ersten Rad 2 wirksam, wenn der Bremsmomentfluss durch die Fliehkraftkupplung 15 unterbrochen ist. Auf diese Weise bewegt sich das Fahrzeug nicht vollständig ungebremst weiter, sondern es wirkt weiterhin die von der zweiten Bremseinrichtung 7 aufgebrachte Bremskraft.

Die Bremskraft und folglich auch das von der zweiten Bremseinrichtung 7 in das erste Rad 2 eingeleitete Bremsmoment sind jedoch hierbei in der Weise mittels der Begrenzungseinrichtung 23 begrenzt, dass sich das erste Rad 2 wieder zu drehen beginnt und damit die Winkelgeschwindigkeit W2 des ersten Rades 2 wieder zunimmt, wenn die Fliehkraftkupplung 15 sich öffnet und damit den Bremsmomentfluss der ersten Bremseinrichtung 6 unterbricht. Beispielsweise könnte die mit der zweiten Bremseinrichtung 7 aufbringbare Bremskraft auf 20 Prozent jener Bremskraft, bei der es unter Wirkung der zweiten Bremseinrichtung 7 allein gerade nicht zum Blockieren des ersten Rades 2 kommt, begrenzt sein. Vorzugsweise erfolgt die Auslegung der Begrenzung unter Berücksichtigung verschiedener Paarungen von Reifen und Untergrund sowie unter Berücksichtigung unterschiedlicher Betriebsverhältnisse, etwa unterschiedlicher Temperaturen und/oder Nässegrade. Bevorzugt erfolgt die Auslegung zudem derart, dass sich das erste Rad 2 bei Öffnung der Fliehkraftkupplung 15 wieder zu drehen beginnen kann, wenn ein oder mehrere Parameter, die diese Betriebsverhältnisse kennzeichnen, jeweils innerhalb eines zugeordneten, vordefinierten Bereiches liegen.

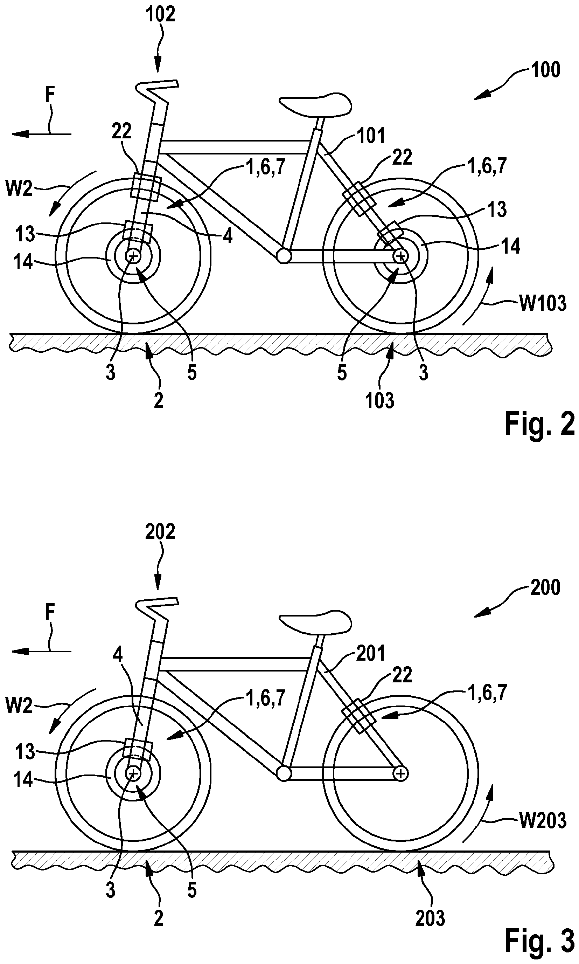

Die Figur 2 zeigt in Übereinstimmung mit einem bevorzugten Ausführungsbeispiel ein als Fahrrad ausgebildetes einspuriges Fahrzeug 100 mit einem Rahmen 101, einem Vorderlenker 102 sowie einem ersten Rad 2 und einem zweiten Rad 103. Das erste Rad 2 bildet ein Vorderrad, das zweite Rad 103 ein Hinterrad des Zweirads 100. In Figur 2 bewegt sich das Fahrzeug 100 in Pfeilrichtung F auf einem Untergrund fort, die Winkelgeschwindigkeiten der Räder 2, 103 sind mit W2 und W103 bezeichnet. An jedem der Räder 2, 103 ist eine Antiblockier-Bremsanordnung 1 vorgesehen, wie sie vorstehend unter Bezugnahme auf Figur 1 beschrieben wurde, wobei jede der Antiblockier-Bremsanordnungen 1 des Fahrzeugs 100 jeweils auf das Rad 2 oder 103 wirkt, an dem sie angeordnet ist. Die Ausführungen zu Figur 1 in Bezug auf das erste Rad 2 gelten daher, was Figur 2 anbetrifft, in entsprechender Weise auch für das zweite Rad 103. An dem Vorderlenker 102 sind für die beiden Antiblockier-Bremsanordnungen 1 des Fahrzeugs 100 jeweils eine Bedieneinrichtung 11, beispielsweise jeweils ein Bremshebel, angeordnet, die in Figur 2 der Übersicht halber nicht eingezeichnet sind. Eine der Bedieneinrichtungen 11 dient dann dem Abbremsen des ersten Rades 2 mittels der an dem ersten Rad 2 angeordneten Scheiben- und Felgenbremsen 13 bzw. 22, während die zweite der Bedieneinrichtungen 11 dem Abbremsen des zweiten Rades 103 mittels der an dem zweiten Rad 103 angeordneten Scheiben- und Felgenbremsen 13 bzw. 22 dient.

In Figur 3 ist in Übereinstimmung mit einem anderen Ausführungsbeispiel ein weiteres, als Fahrrad ausgebildetes einspuriges Fahrzeug 200 mit einem Rahmen 201, einem Vorderlenker 202 sowie einem ersten Rad 2 und einem zweiten Rad 203 gezeigt. Das Fahrzeug 200 der Figur 3 bewegt sich in Pfeilrichtung F auf einem Untergrund fort, die Winkelgeschwindigkeiten der Räder 2, 203 sind mit W2 und W203 bezeichnet. Das Fahrzeug 200 unterscheidet sich dadurch von dem Fahrzeug 100 der Figur 2, dass bei Fahrzeug 200 nur eine Antiblockier-Bremsanordnung 1 vorgesehen ist, wobei sich diese Antiblockier-Bremsanordnung ihrerseits lediglich dadurch von der in Figur 1 skizzierten unterscheidet, dass in Figur 3 die erste Bremseinrichtung 6 an dem ersten Rad 2 des Fahrzeugs 200, in Figur 3 an dem Vorderrad, angeordnet ist, während die zweite Bremseinrichtung 7 an dem zweiten Rad 203, in Figur 3 dem Hinterrad, angeordnet ist. Bei dem Beispiel der Figur 3 ist die Begrenzung von Bremskraft bzw. Bremsmoment der zweiten Bremseinrichtung 7 in gleicher Weise wie zu Figur 1 erläutert ausgelegt, mit dem Unterschied, dass gemäß Figur 3 die zweite Bremseinrichtung 7 und damit die Felgenbremse 22 am zweiten Rad 203 wirksam wird, während die Scheibenbremse 13 an dem ersten Rad 2 wirkt.

Obgleich die vorliegende Erfindung vorstehend anhand bevorzugter Ausführungsbeispiele vollständig beschrieben wurde, ist sie nicht darauf beschränkt, sondern kann auf vielfältige Art und Weise modifiziert werden.

Beispielsweise könnte die erste Bremseinrichtung 6 anstatt mit einer Scheibenbremse 13 auch mit einer Trommelbremse ausgebildet sein.

## Patentansprüche

1. Antiblockier-Bremsanordnung (1) für ein Fahrzeug (100; 200), insbesondere für ein Zweirad,
mit einer ersten Bremseinrichtung (6); **gekennzeichnet durch** eine Fliehkraftkupplung (15), welche dafür vorgesehen ist, ein erstes Element (14) der ersten Bremseinrichtung (6) und ein erstes Rad (2) des Fahrzeugs (100; 200) derart miteinander zu koppeln, wobei mittels der Fliehkraftkupplung (15) ein Bremsmomentfluss von dem ersten Element (14) der ersten Bremseinrichtung (6) auf das erste Rad (2) unterbrochen wird, wenn eine Winkelgeschwindigkeit (W2) des ersten Rades (2) einen vorbestimmten Grenzwert unterschreitet, wobei der Bremsmomentfluss durch die Fliehkraftkupplung (15) unterbrochen wird, wenn die Winkelgeschwindigkeit (W2) des ersten Rades (2) einem Wert von im Wesentlichen Null um eine Drehachse (3) des ersten Rades (2) in Bezug auf ein Bauteil (4) des Fahrzeugs (100; 200), an dem das erste Rad (2) drehbar gelagert ist, entspricht.

2. Antiblockier-Bremsanordnung nach Anspruch 1, **dadurch gekennzeichnet, dass** eine Antriebsseite (15a) der Fliehkraftkupplung (15) für eine drehmomentübertragende Kopplung mit dem ersten Rad (2) eingerichtet ist und dass eine Abtriebsseite (15b) der Fliehkraftkupplung (15) mit dem ersten Element (14) der ersten Bremseinrichtung (6) in drehmomentübertragender Weise gekoppelt ist.

3. Antiblockier-Bremsanordnung nach Anspruch 1, **dadurch gekennzeichnet, dass** die Antiblockier-Bremsanordnung (1) ferner ein Getriebe (17) aufweist, wobei eine Antriebsseite (17c) des Getriebes (17) für eine drehmomentübertragende Kopplung mit dem ersten Rad (2) eingerichtet ist, wobei eine Abtriebsseite (17d) des Getriebes (17) mit einer Antriebsseite (15a) der Fliehkraftkupplung (15) in drehfester und drehmomentübertragender Weise gekoppelt ist und wobei eine Abtriebsseite (15b) der Fliehkraftkupplung (15) mit dem ersten Element (14) der ersten Bremseinrichtung (6) in drehmomentübertragender Weise gekoppelt ist, wobei das Getriebe (17) derart ausgebildet ist, dass es eine auf der Antriebsseite (17c) des Getriebes (17) anliegende erste Drehzahl in eine zweite Drehzahl auf der Abtriebsseite (17d) des Getriebes (17) übersetzt und die zweite Drehzahl höher als die erste Drehzahl ist.

4. Antiblockier-Bremsanordnung nach einem der Ansprüche 1 bis 3, **dadurch gekennzeichnet, dass** die Antiblockier-Bremsanordnung (1) ferner eine zweite Bremseinrichtung (7) aufweist, welche derart ausgebildet ist, dass sowohl bei ununterbrochenem Bremsmomentfluss von dem ersten Element (14) der ersten Bremseinrichtung (6) auf das erste Rad (2) als auch bei Unterbrechung dieses Bremsmomentflusses durch die Fliehkraftkupplung (15) eine Bremskraft und/oder ein Bremsmoment mittels der zweiten Bremseinrichtung (7) auf das erste Rad (2) und/oder auf ein zweites Rad (203) des Fahrzeugs (100; 200) aufbringbar ist/sind.

5. Antiblockier-Bremsanordnung nach Anspruch 4, **dadurch gekennzeichnet, dass** die zweite Bremseinrichtung (7) derart ausgebildet ist, dass die mittels der zweiten Bremseinrichtung (7) auf das erste Rad (2) und/oder auf das zweite Rad (203) aufbringbare Bremskraft und/oder das mittels der zweiten Bremseinrichtung (7) auf das erste Rad (2) und/oder auf das zweite Rad (203) aufbringbare Bremsmoment in der Weise begrenzt ist/sind, dass die Winkelgeschwindigkeit (W2) des ersten Rades (2) nach einer Unterbrechung des Bremsmomentflusses von dem ersten Element (14) der ersten Bremseinrichtung (6) auf das erste Rad (2) mittels der Fliehkraftkupplung (15) unter der Wirkung der Trägheit des Fahrzeugs (100; 200) wieder zunehmen kann, wenn das Fahrzeug (100; 200) innerhalb eines vordefinierten Bereichs von Betriebsverhältnissen betrieben wird.

6. Antiblockier-Bremsanordnung nach Anspruch 4 oder 5, **dadurch gekennzeichnet, dass** eine Bedieneinrichtung (11) vorgesehen ist, mittels der die erste Bremseinrichtung (6) und die zweite Bremseinrichtung (7) gemeinsam, und bevorzugt gleichzeitig, betätigbar sind.

7. Fahrzeug (100; 200), insbesondere Zweirad, mit zumindest einem Rad (2, 103; 2, 203) zum fahrbaren Abstützen des Fahrzeugs (100; 200) auf einem Untergrund, wobei das Fahrzeug (100; 200) mit zumindest einer Antiblockier-Bremsanordnung (1) nach einem der Ansprüche 1 bis 6 ausgestattet ist.

8. Fahrzeug nach Anspruch 7, **dadurch gekennzeichnet, dass** das Fahrzeug (100) mehrere Räder (2, 103) aufweist, wobei jedes der Räder (2, 103) des Fahrzeugs (100) mit einer Antiblockier-Bremsanordnung (1) nach einem der Ansprüche 1 bis 6 ausgestattet ist.

9. Verfahren zum Abbremsen eines Fahrzeugs (100; 200), insbesondere eines Zweirades, welches eine Antiblockier-Bremsanordnung (1) mit einer ersten Bremseinrichtung (6), mit einer zweiten Bremseinrichtung (7) und mit einer Fliehkraftkupplung (15), mittels der ein erstes Element (14) der ersten Bremseinrichtung (6) und ein erstes Rad (2) des Fahrzeugs (100; 200) miteinander gekoppelt sind, aufweist, mit den Verfahrensschritten:
- Aufbringen eines ersten Bremsmoments über das erste Element (14) der ersten Bremseinrichtung (6) auf das erste Rad (2) mittels der ersten Bremseinrichtung (6) und Aufbringen einer Bremskraft und/oder eines zweiten Bremsmoments auf das erste Rad (2) und/oder auf ein zweites Rad (203) des Fahrzeugs (100; 200) mittels der zweiten Bremseinrichtung (7);
- Unterbrechen eines Bremsmomentflusses von dem ersten Element (14) der ersten Bremseinrichtung (6) auf das erste Rad (2) mittels der Fliehkraftkupplung (15), wenn eine Winkelgeschwindigkeit (W2) des ersten Rades (2) einen vorbestimmten Grenzwert unterschreitet, wobei der Bremsmomentfluss durch die Fliehkraftkupplung (15) unterbrochen wird, wenn die Winkelgeschwindigkeit (W2) des ersten Rades (2) einem Wert von im Wesentlichen Null um eine Drehachse (3) des ersten Rades (2) in Bezug auf ein Bauteil (4) des Fahrzeugs (100; 200), an dem das erste Rad (2) drehbar gelagert ist, entspricht; und
- fortgesetztes Aufbringen der Bremskraft und/oder des zweiten Bremsmoments auf das erste Rad (2) und/oder auf das zweite Rad (203) des Fahrzeugs (100; 200) mittels der zweiten Bremseinrichtung (7), während der Bremsmomentfluss von dem ersten Element (14) der ersten Bremseinrichtung (6) auf das erste Rad (2) durch die Fliehkraftkupplung (15) unterbrochen ist.

## Claims

1. Anti-lock braking arrangement (1) for a vehicle (100; 200), in particular for a two-wheeled vehicle, having a first braking device (6); **characterized by** a centrifugal clutch (15) which is provided to couple a first element (14) of the first braking device (6) and a first wheel (2) of the vehicle (100; 200) to one another in this way, a braking torque flow from the first element (14) of the first braking device (6) to the first wheel (2) being interrupted by means of the centrifugal clutch (15) if an angular velocity (W2) of the first wheel (2) undershoots a predefined limit value, the braking torque flow being interrupted by way of the centrifugal clutch (15) if the angular velocity (W2) of the first wheel (2) corresponds to a value of substantially zero about a rotational axis (3) of the first wheel (2) in relation to a component (4) of the vehicle (100; 200), on which component (4) the first wheel (2) is mounted rotatably.

2. Anti-lock braking arrangement according to Claim 1, **characterized in that** a drive side (15a) of the centrifugal clutch (15) is set up for a torque-transmitting coupling to the first wheel (2), and **in that** an output side (15b) of the centrifugal clutch (15) is coupled to the first element (14) of the first braking device (6) in a torque-transmitting way.

3. Anti-lock braking arrangement according to Claim 1, **characterized in that**, furthermore, the anti-lock braking arrangement (1) has a transmission (17), a drive side (17c) of the transmission (17) being set up for a torque-transmitting coupling to the first wheel (2), an output side (17d) of the transmission (17) being coupled to a drive side (15a) of the centrifugal clutch (15) in a torque-transmitting and fixed way so as to rotate with it, and an output side (15b) of the centrifugal clutch (15) being coupled to the first element (14) of the first braking device (6) in a torque-transmitting way, the transmission (17) being configured in such a way that it steps up a first rotational speed which prevails on the drive side (17c) of the transmission (17) into a second rotational speed on the output side (17d) of the transmission (17), and the second rotational speed is higher than the first rotational speed.

4. Anti-lock braking arrangement according to one of Claims 1 to 3, **characterized in that**, furthermore, the anti-lock braking arrangement (1) has a second braking device (7) which is configured in such a way that, both in the case of an uninterrupted braking torque flow from the first element (14) of the first braking device (6) to the first wheel (2) and in the case of an interruption of the said braking torque flow by way of the centrifugal clutch (15), a braking force and/or a braking torque can be applied by means of the second braking device (7) to the first wheel (2) and/or to a second wheel (203) of the vehicle (100; 200).

5. Anti-lock braking arrangement according to Claim 4, **characterized in that** the second braking device (7) is configured in such a way that the braking force which can be applied by means of the second braking device (7) to the first wheel (2) and/or to the second wheel (203) and/or the braking torque which can be applied by means of the second braking device (7) to the first wheel (2) and/or to the second wheel (203) are/is limited in such a way that, after an interruption of the braking torque flow from the first element (14) of the first braking device (6) to the first wheel (2) by means of the centrifugal clutch (15), the angular velocity (W2) of the first wheel (2) can increase again under the action of the inertia of the vehicle (100; 200) if the vehicle (100; 200) is operated within a predefined range of operating conditions.

6. Anti-lock braking arrangement according to Claim 4 or 5, **characterized in that** an operating device (11) is provided, by means of which the first braking device (6) and the second braking device (7) can be actuated jointly, and preferably at the same time.

7. Vehicle (100; 200), in particular two-wheeled vehicle, having at least one wheel (2, 103; 2, 203) for movably supporting the vehicle (100; 200) on an underlying surface, the vehicle (100; 200) being equipped with at least one anti-lock braking arrangement (1) according to one of Claims 1 to 6.

8. Vehicle according to Claim 7, **characterized in that** the vehicle (100) has a plurality of wheels (2, 103), each of the wheels (2, 103) of the vehicle (100) being equipped with an anti-lock braking arrangement (1) according to one of Claims 1 to 6.

9. Method for braking a vehicle (100; 200), in particular a two-wheeled vehicle, which has an anti-lock braking arrangement (1) with a first braking device (6), with a second braking device (7), and with a centrifugal clutch (15), by means of which a first element (14) of the first braking device (6) and a first wheel (2) of the vehicle (100; 200) are coupled to one another, having the method steps:
- applying of a first braking torque via the first element (14) of the first braking device (6) to the first wheel (2) by means of the first braking device (6), and applying of a braking force and/or a second braking torque to the first wheel (2) and/or to a second wheel (203) of the vehicle (100; 200) by means of the second braking device (7) ;
- interrupting of a braking torque flow from the first element (14) of the first braking device (6) to the first wheel (2) by means of the centrifugal clutch (15) if an angular velocity (W2) of the first wheel (2) undershoots a predefined limit value, the braking torque flow being interrupted by way of the centrifugal clutch (15) if the angular velocity (W2) of the first wheel (2) corresponds to a value of substantially zero about a rotational axis (3) of the first wheel (2) in relation to a component (4) of the vehicle (100; 200), on which component (4) the first wheel (2) is mounted rotatably; and
- continued applying of the braking force and/or the second braking torque to the first wheel (2) and/or to the second wheel (203) of the vehicle (100; 200) by means of the second braking device (7), while the braking torque flow from the first element (14) of the first braking device (6) to the first wheel (2) is interrupted by way of the centrifugal clutch (15).

## Revendications

1. Agencement de frein antiblocage (1) pour un véhicule (100 ; 200), en particulier pour un véhicule deux-roues,
comprenant un premier dispositif de freinage (6) ; **caractérisé par**
un embrayage à force centrifuge (15) qui est prévu pour accoupler l'un à l'autre un premier élément (14) du premier dispositif de freinage (6) et une première roue (2) du véhicule (100 ; 200) de telle sorte, un flux de couple de freinage du premier élément (14) du premier dispositif de freinage (6) à la roue (2) étant interrompu au moyen de l'embrayage à force centrifuge (15), lorsqu'une vitesse angulaire (W2) de la première roue (2) est en dessous d'une valeur limite prédéterminée, le flux de couple de freinage étant interrompu par l'embrayage à force centrifuge (15) lorsque la vitesse angulaire (W2) de la première roue (2) correspond à une valeur essentiellement nulle autour d'un axe de rotation (3) de la première roue (2) par rapport à un composant (4) du véhicule (100 ; 200) sur lequel la première roue (2) est supportée de manière rotative.

2. Agencement de frein antiblocage selon la revendication 1, **caractérisé en ce qu'**un côté d'entraînement (15a) de l'embrayage à force centrifuge (15) est prévu pour un accouplement à transfert de couple avec la première roue (2) et **en ce qu'**un côté de prise de force (15b) de l'embrayage à force centrifuge (15) est accouplé au premier élément (14) du premier dispositif de freinage (6) de manière à transmettre le couple.

3. Agencement de frein antiblocage selon la revendication 1, **caractérisé en ce que** l'agencement de frein antiblocage (1) présente en outre une transmission (17), un côté d'entraînement (17c) de la transmission (17) étant prévu pour un accouplement par transfert de couple avec la première roue (2), un côté de prise de force (17d) de la transmission (17) étant accouplé de manière solidaire en rotation et avec transfert de couple à un côté d'entraînement (15a) de l'embrayage à force centrifuge (15) et un côté de prise de force (15b) de l'embrayage à force centrifuge (15) étant accouplé par transfert de couple au premier élément (14) du premier dispositif de freinage (6), la transmission (17) étant réalisée de telle sorte qu'elle convertisse une première vitesse de rotation s'appliquant au côté d'entraînement (17c) de la transmission (17) en une deuxième vitesse de rotation au niveau du côté de prise de force (17d) de la transmission (17) et la deuxième vitesse de rotation étant supérieure à la première vitesse de rotation.

4. Agencement de frein antiblocage selon l'une quelconque des revendications 1 à 3, **caractérisé en ce que** l'agencement de frein antiblocage (1) présente en outre un deuxième dispositif de freinage (7) qui est réalisé de manière à ce qu'à la fois lorsque le flux de couple de freinage du premier élément (14) du premier dispositif de freinage (6) à la première roue (2) est interrompu et que ce flux de couple de freinage est interrompu par l'embrayage à force centrifuge (15), une force de freinage et/ou un couple de freinage puissent être appliqués au moyen du deuxième dispositif de freinage (7) à la première roue (2) et/ou à une deuxième roue (203) du véhicule (100 ; 200).

5. Agencement de frein antiblocage selon la revendication 4, **caractérisé en ce que** le deuxième dispositif de freinage (7) est réalisé de telle sorte qu'au moyen du deuxième dispositif de freinage (7), la force de freinage pouvant être appliquée à la première roue (2) et/ou à la deuxième roue (203), et/ou le couple de freinage pouvant être appliqué au moyen du deuxième dispositif de freinage (7) à la première roue (2) et/ou à la deuxième roue (203), soient limités de telle sorte que la vitesse angulaire (W2) de la première roue (2) puisse à nouveau augmenter après l'interruption du flux de couple de freinage du premier élément (14) du premier dispositif de freinage (6) à la première roue (2) au moyen de l'embrayage à force centrifuge (15) sous l'effet de l'inertie du véhicule (100 ; 200), si le véhicule (100 ; 200) est entraîné à l'intérieur d'une plage prédéfinie de rapports de fonctionnement.

6. Agencement de frein antiblocage selon la revendication 4 ou 5, **caractérisé en ce qu'**un dispositif de commande (11) est prévu, au moyen duquel le premier dispositif de freinage (6) et le deuxième dispositif de freinage (7) peuvent être actionnés ensemble, et de préférence simultanément.

7. Véhicule (100 ; 200), en particulier véhicule deux-roues, comprenant au moins une roue (2, 103 ; 2, 203) pour supporter le véhicule (100 ; 200) de façon mobile sur un sol, le véhicule (100 ; 200) étant muni d'au moins un agencement de frein antiblocage (1) selon l'une quelconque des revendications 1 à 6.

8. Véhicule selon la revendication 7, **caractérisé en ce que** le véhicule (100) présente plusieurs roues (2, 103), chacune des roues (2, 103) du véhicule (100) étant munie d'un agencement de frein antiblocage (1) selon l'une quelconque des revendications 1 à 6.

9. Procédé de freinage d'un véhicule (100 ; 200), en particulier d'un véhicule deux-roues, qui présente un agencement de frein antiblocage (1) avec un premier dispositif de freinage (6), avec un deuxième dispositif de freinage (7) et avec un embrayage à force centrifuge (15), au moyen duquel un premier élément (14) du premier dispositif de freinage (6) et une première roue (2) du véhicule (100 ; 200) sont accouplés l'un à l'autre, comprenant les étapes de procédé suivantes :
- application d'un premier couple de freinage par le biais du premier élément (14) du premier dispositif de freinage (6) sur la première roue (2) au moyen du premier dispositif de freinage (6) et application d'une force de freinage et/ou d'un deuxième couple de freinage sur la première roue (2) et/ou sur une deuxième roue (203) du véhicule (100 ; 200) au moyen du deuxième dispositif de freinage (7) ;
- interruption d'un flux de couple de freinage du premier élément (14) du premier dispositif de freinage (6) à la première roue (2) au moyen de l'embrayage à force centrifuge (15), lorsqu'une vitesse angulaire (W2) de la première roue (2) est en dessous d'une valeur limite prédéfinie, le flux de couple de freinage étant interrompu par la force centrifuge (15) lorsque la vitesse angulaire (W2) de la première roue (2) correspond à une valeur essentiellement nulle autour d'un axe de rotation (3) de la première roue (2) par rapport à un composant (4) du véhicule (100 ; 200), sur lequel la première roue (2) est supportée de manière rotative ; et
- application poursuivie de la force de freinage et/ou du deuxième couple de freinage sur la première roue (2) et/ou sur la deuxième roue (203) du véhicule (100 ; 200) au moyen du deuxième dispositif de freinage (7) pendant que le flux de couple de freinage du premier élément (14) du premier dispositif de freinage (6) à la première roue (2) est interrompu par l'embrayage à force centrifuge (15).
